# EUROPEAN PATENT APPLICATION

(11) **EP 2 988 569 A1**
(43) Date of publication of application: **24.02.2016**
(21) Application number: 14181953.2
(22) Date of filing: 22.08.2014
(51) Int. Cl.: H04W 88/08

(54) **Base station apparatus**

(71) Applicant: EXFO Oy, 90590 Oulu (FI)
(72) Inventor: Kämäräinen, Jussi, 90590 Oulu (FI)
(74) Representative: Kolster Oy Ab

(57) **Abstract**

This document discloses a base station apparatus, comprising: a first radio frequency signal line designed to convey a first radio frequency transmission signal and a first radio frequency reception signal between a first antenna port and a signal processing circuitry of the base station apparatus; a second radio frequency signal line designed to convey a second radio frequency transmission signal and a second radio frequency reception signal between a second antenna port and the signal processing circuitry of the base station apparatus; a power amplifier coupled to the first radio frequency signal line to employ the first radio frequency signal line only for transmission; and a duplexer coupled to the first radio frequency signal line and the second radio frequency signal line and configured to couple the first radio frequency signal line and the second radio frequency signal line to the same antenna.

## Description

### TECHNICAL FIELD

The invention relates to a base station of a wireless network and, particularly, modifying a base station apparatus to a specific purpose.

### TECHNICAL BACKGROUND

A base station of a cellular communication system provides wireless access to terminal devices located in a coverage area of the base station. Modern base stations employ a multiple-input-multiple-output (MIMO) technology to communicate with a terminal device over a plurality of spatially distributed streams. The MIMO technology improves data rates and capacity of the base station. In some applications, emulated base stations are employed to capture a connection of a terminal device. For example, authorities may employ such emulated base stations. Since a primary function of the emulated base station is to capture a single or a few connections, it does not benefit from the MIMO technology.

### BRIEF DESCRIPTION

The invention is defined by the independent claims.

Embodiments are defined in the dependent claims.

### BRIEF DESCRIPTION OF THE DRAWINGS

In the following the invention will be described in greater detail by means of preferred embodiments with reference to the attached [accompanying] drawings, in which
Figure 1 illustrates a wireless communication scenario to which embodiments of the invention may be applied;
Figure 2 illustrates a block diagram of an embodiment of a modified base station apparatus;
Figure 3 illustrates a further embodiment of the modified base station apparatus of Figure 2;
Figure 4 illustrates another embodiment of a modified base station apparatus; and
Figure 5 illustrates a flow diagram of a method for modifying a base station according to an embodiment of the invention.

### DETAILED DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It should be noted that while Figures illustrate various embodiments of apparatuses, they are simplified block diagrams that only show some structures and functional entities. The connections shown in these Figures are logical connections; the actual physical connections may be different. Interfaces between the various elements may be implemented with suitable interface technologies, such as a message interface, a method interface, a sub-routine call interface, a block interface, or any hardware/software means enabling communication between functional sub-units. It is apparent to a person skilled in the art that the described apparatuses may also comprise other functions and structures. It should be appreciated that details of some functions, structures, and the protocols used for communication are irrelevant to the actual invention. Therefore, they need not be discussed in more detail here.

Embodiments of the invention relate to a base station apparatus configured to attract terminal devices of a cellular communication system to connect to the base station. The base station may simulate or emulate the functions of a real base station of the cellular communication system. The cellular communication system may be Long Term Evolution (LTE) standardized within the Third Generation Partnership Project (3GPP), and more information on the LTE can be found in the 3GPP specifications. The cellular communication system may, alternatively operate according to non-LTE specifications such as second and third generation cellular communication systems. Such systems comprise Global System for Mobile Communications (GSM) and Universal Mobile Telecommunication system with its evolution versions such as High-Speed Packet Access (HSPA). More information on those standards can be found in corresponding 3GPP and European Telecommunication Standards Institute (ETSI) specifications.

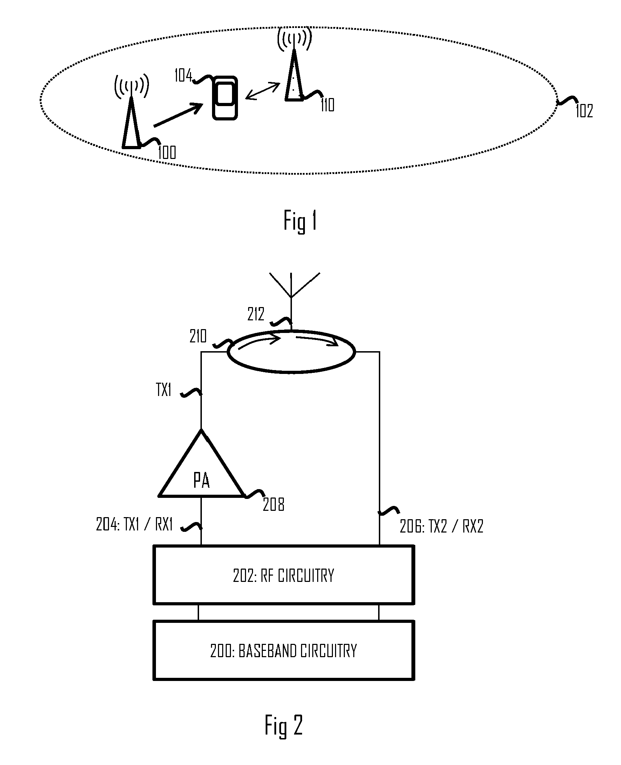

Figure 1 illustrates an example embodiment of a base station apparatus 100. The apparatus 100 may comprise a casing arranged to house conventional base station building blocks such as digital signal processor(s), baseband transceiver circuitries, and radio frequency transceiver circuitries. The apparatus 100 comprises one or more processors and one or more memories including computer program code. The processor and the memory may be implemented by an electronic circuitry.

The term 'processor' refers to a physical device that is capable of processing data in a computer or other digital electronic device. Depending on the processing power needed, the apparatus 100 may comprise several processors such as parallel processors or one or more multicore processors. A non-exhaustive list of implementation techniques for the processor includes, but is not limited to: logic components, standard integrated circuits, application-specific integrated circuits (ASIC), system-on-a-chip (SoC), application-specific standard products (ASSP), microprocessors, digital signal processors, special-purpose computer chips, and field-programmable gate arrays (FPGA).

The term 'memory' refers to a physical device that is capable of storing the computer program code and data on a temporary or permanent basis for use in a computer or other digital electronic device. In an example embodiment, the term 'memory' refers to working memory (also known as primary storage, main memory or internal storage) directly accessible to the processor. In an example embodiment, the working memory may be implemented as a random-access memory (RAM), such as a dynamic RAM, DRAM.

The one or more memories and the computer program code are configured to, with the one or more processors, cause the base station apparatus to execute at least some of the embodiments described below. The processor may, upon reading the computer program code from the memory, execute computer program instructions comprised in the computer program code and carry out a computer process defined by the program instructions 104. In an embodiment, the computer process comprises establishing a cellular communication connection with one or more terminal devices 104 of the cellular communication system.

In an example embodiment, the apparatus 100 is utilized to identify a terminal device 104 carried by a user or a terminal device being fixed to a vehicle. Consequently, the apparatus 100 may also be mobile, e.g. being carried by a person following the user of the mobile device or being fixed to a vehicle following the user of the mobile device and/or the vehicle of the user.

The terminal device may be understood as comprising a subscriber identity module (SIM) and a mobile device such as a cellular phone, a tablet computer, or a laptop computer. The mobile device comprises the hardware and software for executing applications and connecting to base stations of cellular communication networks according to the LTE and/or non-LTE specifications, while the SIM may be used to identify and authenticate subscribers on mobile telephony devices and services. The mobile device may comprise a radio terminal, a subscriber terminal, smartphone, mobile station, mobile phone, portable computer, pad computer, laptop, tablet, or some other type of wireless mobile communication device The mobile device may be a piece of equipment or a device that is configured to associate its user with a subscription and allows the user to interact with the radio system, e.g. the subscriber entity is capable of requesting a service from the radio system. The subscriber entity presents information to the user and allows the user to input information. In other words, the subscriber entity may be any terminal capable of wirelessly receiving information from and/or wirelessly transmitting information to the radio system. Besides communication capabilities, the subscriber entity may include computer functionalities or functionalities of other data processing devices.

The term 'base station' refers to a Node B, enhanced or evolved NodeB (eNB), a home eNode B (HeNB), an access point (AP), an IEEE 802.11 based access point, a femto node, a femto base station, or any other equipment belonging to a network infrastructure of a radio system and implementing a radio communication interface with the subscriber entity. A real base station 110 of the cellular communication system may provide the terminal device 104 with access to other parts of the cellular communication system, other terminal devices, and the Internet. The base station 110 may provide the access within its service area 102 defined by a radio coverage of the base station 110.

In an example embodiment of the LTE, real LTE cells form a radio coverage 102. 'Real' refers to the fact that the cellular radio system implementing the real LTE cells is authorized by the authorities and it provides continuous service for the users of the subscriber entities. The apparatus 100 may be configured to establish an emulated cell overlaid with the real cells, e.g. the cell 102. The apparatus 100 may establish the emulated cell. In this context, 'emulated' refers to the fact that the emulated cell is not a real authorized cell, but a fake cell that does not provide real service. The emulated cell may, however, duplicate or emulate at least a part of the functions of the real cell, so that the emulated behaviour of the emulated cell closely resembles the behaviour of the real cell (as opposed to a computer simulation of an abstract model of the cell). In fact, the emulated cell resembles the real cell to such a degree that the terminal device 104 considers it a real cell. A communication range of the emulated cell may be smaller than the range of a regular real macro LTE cell. The apparatus 100 may comprise an emulator base station or even a real base station apparatus to establish the emulated cell.

The purpose of creating the emulated cell may be to attract real terminal devices 104 to communicate with the base station 100 of the emulated cell. During the communication, the apparatus 100 may acquire information on the terminal devices 104, e.g. the IMSI and/or IMEI. The reason for capturing the IMSI and/or IMEI may be, for example, capturing and/or tracking criminal or suspicious persons, testing, or gathering statistics. In order to improve the probability of the terminal devices 104 communicating with the base station of the emulated cell, the base station may use transmission parameters that are attractive for the subscriber entities. Typically, a terminal device connects to a cell providing the best communication link, and the quality of the communication link may be determined by measuring received signal strength. The base station 100 may thus use a transmission power, directional beamforming, and/or similar parameters that cause the terminal devices 104 to see the emulated cell as attractive.

When the base station apparatus configured to establish the emulated cell is built on a real base station, the real base station may need some modifications so that it would be suitable for use in the capturing of the terminal devices instead of providing the terminal device with the wireless access. Modern base stations supporting the LTE specification, for example, are provided with multiple-input-multiple-output (MIMO) communication capability. The MIMO refers to the ability to communication with a terminal device through a plurality of independent, spatially distributed signal paths. The MIMO may be used for spatial multiplexing where different data is transmitted through the different spatial signal paths, thus improving data rates. One drawback in many conventional base stations supporting the MIMO, when used as such for the capturing of terminal device, is that the transmission power margin is not sufficient for the capturing. Some base stations employing other multi-antenna transmission schemes may have the same property. As a consequence, the base station apparatus may need modifications.

Figure 2 illustrates an embodiment of the modified base station apparatus configured for use as the base station apparatus 100 establishing the emulated cell. Referring to Figure 2, the base station apparatus comprises a first radio frequency (RF) signal line 204 designed to convey a first radio frequency transmission signal TX1 and a first radio frequency reception signal RX1 between a first antenna port and a signal processing circuitry 202, 200 of the base station apparatus. The base station apparatus further comprises a second radio frequency signal line 206 designed to convey a second radio frequency transmission signal TX2 and a second radio frequency reception signal RX2 between a second antenna port and the signal processing circuitry 200, 202 of the base station apparatus. The signal lines 204, 206 and the signal processing circuitries 200, 202 may be standard building blocks of a conventional base station apparatus. In the embodiment of Figure 2, a power amplifier 208 is coupled to the first radio frequency signal line to employ the first radio frequency signal line only for transmission. Furthermore, a duplexer 210 is coupled to the first radio frequency signal line and the second radio frequency signal line and configured to couple the first radio frequency signal line 204 and the second radio frequency signal line 206 to the same antenna 212.

Note that when using the conventional MIMO-capable base station as the starting point, the RF signal lines 204, 206 are inherently designed to be connected to different antenna ports. With the modification shown in Figure 2, the modified base station apparatus according to this embodiment couples the RF signal lines 204, 206 to the same antenna port connected to the antenna 212.

As a result of the modification, the first RF signal line 204 is employed only for the transmission (TX1) and the second RF signal line 206 is employed only for the reception (RX2), thus effectively rendering the MIMO-capable base station apparatus into a single-antenna base station apparatus. The MIMO-capability is not typically needed for the purpose of capturing the terminal device connections. The modification further improves the transmission power margin of the base station apparatus.

In the embodiment of Figure 2, the reception capability RX1 of the first RF signal line 204 may be blocked by the power amplifier 208 providing high attenuation for signal components leaking from the antenna 212 through the duplexer 210 to the output of the power amplifier. With the signal attenuation caused by the isolation of both the duplexer 210 and the power amplifier 204, the RX1 path is effectively blocked. The transmission capability TX2 of the second RF signal line 206 may be blocked by configuring the signal processing circuitry to not transmit a signal to the second RF signal line 206, by conducting the signals transmitted from the signal processing circuitry to the second RF signal line 206 to the ground or otherwise nullifying them, or by configuring the duplexer 210 to isolate any transmission signal coming from the second RF signal line. It should be appreciated that in some embodiments the transmission property TX2 of the second RF signal line 206 may be maintained, although without the use of the additional power amplifier.

The above-mentioned signal processing circuitry may comprise a RF signal processing circuitry 202 and a baseband signal processing circuitry 200. The RF signal processing circuitry 202 may comprise RF components conventionally used in a base station such as a frequency-converter, a low-noise amplifier for a reception chain, one or more band pass filters, etc. The baseband signal processing circuitry 200 may comprise baseband components conventionally used in the base station such as a (de)modulator, a channel (de)coder, a spatial signal processing circuitry controlling the MIMO-related signal processing of multiple spatial transmission streams, etc.

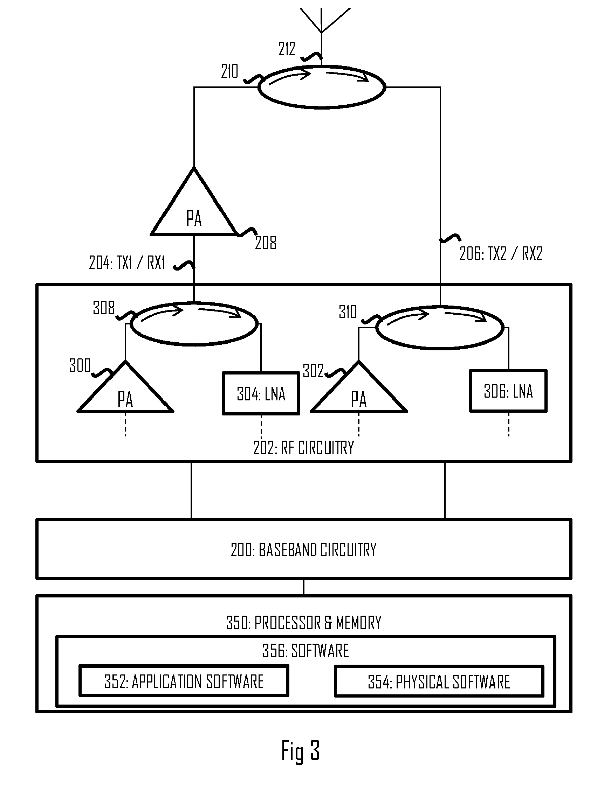

Figure 3 illustrates an embodiment of Figure 2, wherein the components of the RF signal processing circuitry 202 are illustrated in greater detail. As mentioned above, the RF signal lines 204, 206 may be designed for transmission and reception. In order to separate the transmission and reception signal components, the RF signal processing circuitry 202 may comprise a duplexer 308, 310 for each signal line 204, 206. The duplexer 308 may be designed to forward a reception signal RX1 received through the RF signal line 204 to a first reception chain of the base station, e.g. to a low-noise amplifier 304. The duplexer 308 may be further designed to forward a transmission signal TX1 received from a first transmission signal chain of the base station, e.g. from a power amplifier 300, to the first RF signal line 204, e.g. to a first antenna port. Similarly, the duplexer 310 may be designed to forward a reception signal RX2 received through the RF signal line 206 to a second reception chain of the base station, e.g. to a low-noise amplifier 306. The duplexer 310 may be further designed to forward a transmission signal TX2 received from a second transmission signal chain of the base station, e.g. from a power amplifier 302, to the second RF signal line 206, e.g. to a second antenna port. With the modification according to this embodiment of the invention, some of these features of the base station may become obsolete.

The first signal line 204 may be connected to the first antenna port of the RF signal processing circuitry 202, and the second signal line 206 may be connected to the second antenna port of the RF signal processing circuitry 202. The RF signal processing circuitry may thus be considered as being designed to be connected directly to the respective first and second antenna. The antenna ports may be comprise SMA or BNC connectors, for example. It should be appreciated that the first RF signal line 204 and the second RF signal line 206 may comprise signal lines inside the RF signal processing circuitry 202 and/or signal lines outside the RF signal processing circuitry 202.

Figure 3 further illustrates a processor and a memory 350 connected to the baseband circuitry 200. The processor and the memory may be configured to carry out application-specific signal processing tasks in the base station. The memory may store a computer program code 356 implemented by suitable software. In an example embodiment, the computer program code 356 comprises application software 352 and physical layer software 354 as separate software entities communicating with each other. The physical layer software 354 may implement a physical layer signal processing tasks that comply with the specifications of one or more cellular communication protocols supported by the base station. The application software 352 may control the physical layer software 354, implement the needed protocols above the physical layer, and implement features of the capturing of the terminal device connections, e.g. capturing and storing an IMSI and/or IMEI.

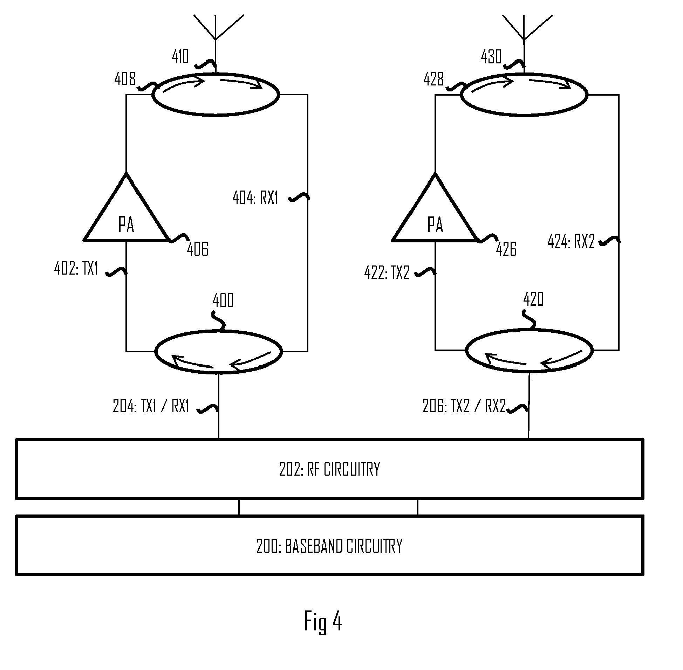

Figure 4 illustrates another embodiment for modifying the base station. This embodiment complies more with the original design of the base station but includes more components than the embodiments of Figures 2 and 3. In this embodiment, the first RF signal line 204 and the second RF signal line 206 are connected to different antennas 410, 430. As a consequence, the first signal paths TX1/RX1 are completely separated from the second signal paths TX2/RX2. This may be realized by coupling a first duplexer 400 to the first RF signal line 204 designed to comprise the signal paths TX1 and RX1. The first duplexer 400 is arranged to separate the signal paths TX1 and RX1 such that it forwards a signal received from the RF signal processing circuitry 202 to a first transmission signal line 402 connecting the first duplexer to a first power amplifier 406. The power amplifier 406 power-amplifies a signal received along the first transmission signal line 402 and outputs the signal to a second duplexer 408 arranged to forward the signal from the power amplifier 406 to a first antenna 410. The second duplexer is further configured to forward a reception signal received from the antenna 410 to a first reception signal line 404 connected to another input port of the first duplexer 400. The first duplexer 400 is configured to forward the signal received along the first reception signal line 404 to the RF signal processing circuitry 202. A similar arrangement is built for the second RF signal line 206. A third duplexer 420 is coupled to the second RF signal line 206 designed to comprise the signal paths TX2 and RX2. The third duplexer 420 is arranged to separate the signal paths TX2 and RX2 such that it forwards a signal received from the RF signal processing circuitry 202 to a second transmission signal line 422 connecting the third duplexer 420 to a second power amplifier 426. The power amplifier 426 power-amplifies a signal received along the second transmission signal line 422 and outputs the signal to a fourth duplexer 428 arranged to forward the signal from the second power amplifier 426 to a second antenna 430. The second duplexer 428 is further configured to forward a reception signal received from the antenna 430 to a second reception signal line 424 connected to another input port of the third duplexer 420. The third duplexer 420 is configured to forward the signal received along the first reception signal line 424 to the RF signal processing circuitry 202.

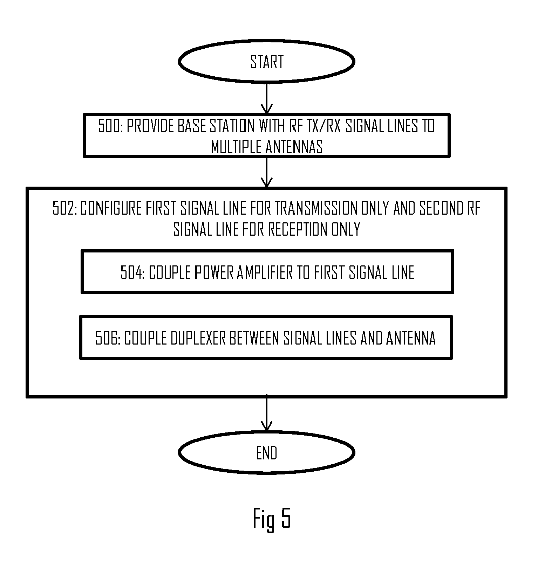

The invention may be realized as a method for modifying a base station apparatus. Figure 5 illustrates an embodiment of such a method. Referring to Figure 5, the method comprises providing in block 500 a base station apparatus comprising a first radio frequency signal line arranged to convey a first radio frequency transmission signal and a first radio frequency reception signal between a first antenna and a signal processing circuitry of the base station apparatus, and a second radio frequency radio frequency signal line arranged to convey a second radio frequency transmission signal and a second radio frequency reception signal between a second antenna and the signal processing circuitry of the base station apparatus. The method further comprises configuring the first signal line for only transmission (block 502). This may be carried out by coupling a power amplifier to the first radio frequency signal line to employ the first radio frequency signal line only for transmission (block 504). A duplexer may be coupled to the first radio frequency signal line and the second radio frequency signal line, and the duplexer may be configured to couple the first radio frequency signal line and the second radio frequency signal line to the same antenna (block 506). In some embodiments, the second RF signal line may be configured for reception only.

It will be obvious to a person skilled in the art that, as the technology advances, the inventive concept can be implemented in various ways. The invention and its embodiments are not limited to the examples described above but may vary within the scope of the claims.

## Claims

1. A base station apparatus, comprising:
a first radio frequency signal line designed to convey a first radio frequency transmission signal and a first radio frequency reception signal between a first antenna port and a signal processing circuitry of the base station apparatus;
a second radio frequency signal line designed to convey a second radio frequency transmission signal and a second radio frequency reception signal between a second antenna port and the signal processing circuitry of the base station apparatus;
a power amplifier coupled to the first radio frequency signal line to employ the first radio frequency signal line only for transmission; and
a duplexer coupled to the first radio frequency signal line and the second radio frequency signal line and configured to couple the first radio frequency signal line and the second radio frequency signal line to the same antenna.

2. The base station apparatus of claim 1, wherein the duplexer is arranged to configure the second radio frequency signal line to convey only radio frequency reception signals.

3. The base station apparatus of claim 2, wherein the duplexer is arranged to couple radio frequency transmission signals from the first radio frequency transmission line to the antenna and the radio frequency reception signals from the antenna to the second radio frequency signal line.

4. The base station apparatus of any preceding claim, further comprising a radio frequency circuitry coupled to the first radio frequency signal line and the second radio frequency signal line such that the power amplifier is disposed between the radio frequency circuitry and the duplexer, the radio frequency circuitry comprising:
a first duplexer coupled to the first radio frequency signal line to separate the first radio frequency signal line to a first radio frequency transmission signal line and a first radio frequency reception signal line; and
a second duplexer coupled to the second radio frequency signal line to separate the second radio frequency signal line to a second radio frequency transmission signal line and a second radio frequency reception signal line.

5. A method for modifying a base station apparatus, comprising:
providing a base station apparatus comprising a first radio frequency signal line arranged to convey a first radio frequency transmission signal and a first radio frequency reception signal between a first antenna and a signal processing circuitry of the base station apparatus, a second radio frequency radio frequency signal line arranged to convey a second radio frequency transmission signal and a second radio frequency reception signal between a second antenna and the signal processing circuitry of the base station apparatus;
coupling a power amplifier to the first radio frequency signal line to employ the first radio frequency signal line only for transmission;
coupling a duplexer to the first radio frequency signal line and the second radio frequency signal line and configuring the duplexer to couple the first radio frequency signal line and the second radio frequency signal line to the same antenna.
